# EUROPEAN PATENT SPECIFICATION

(11) **EP 4 165 298 B1**
(45) Date of publication and mention of the grant of the patent: **19.02.2025**
(21) Application number: 21727615.3
(22) Date of filing: 20.05.2021
(51) Int. Cl.: F03D 1/06

(54) **WIND TURBINE BLADE**
WINDTURBINENSCHAUFEL
PALE D'ÉOLIENNE

(30) Priority: 15.06.2020 NL 2025831
(43) Date of publication of application: 19.04.2023
(73) Proprietor: Mutech B.V., 2629 HS Delft (NL)
(72) Inventor: RUBIO CARPIO, Alejandro, 2600 AA Delft (NL); RAGNI, Daniele, 2600 AA Delft (NL); AVALLONE, Francesco, 2600 AA Delft (NL); VAN DER ZWAAG, Sybrand, 2600 AA Delft (NL); SNELLEN, Mirjam, 2600 AA Delft (NL)
(74) Representative: Hoyng Rokh Monegier B.V.
(86) International application number: PCT/NL2021/050323
(87) International publication number: WO 2021/256920

(56) References cited:
- EP-A1- 2 053 240
- EP-B1- 2 053 240
- WO-A1-2011/053119
- WO-A1-2014/207015
- CN-A- 109 356 802
- US-A1- 2008 080 977
- US-A1- 2012 027 590
- US-A1- 2018 216 600

## Description

The invention relates to a wind turbine blade provided with a leading edge and a trailing edge, wherein the trailing edge is sharper than the leading edge and wherein a pressure side surface and a suction side surface of the wind turbine blade meet each other at the trailing edge.

Such a wind turbine blade is known from the European patent EP-B- 2 783 103. In order to improve noise reducing characteristics this known wind turbine blade comprises a plurality of serrations that are provided at the trailing edge, wherein the serrations project free of the trailing edge and are arranged to modulate the airflow, wherein each of the serrations comprise a substantially triangular serration body with a proximal base end located adjacent the trailing edge, and a distal tip end projecting away from the trailing edge, wherein serration side edges extend between the proximal base end and the distal tip end, and wherein at least one thoroughgoing aperture is defined in the substantially triangular serration body between the base end and the tip end.

EP 2 053 240 discloses a wind turbine comprising a rotor with a hub and turbine blades, and further comprising a boundary layer control system for the turbine blades. A plurality of pressure chambers is located in the blade distributed over the length of the blade. Each pressure chamber is in communication with the outside of the blade through one or more corresponding openings in the outer surface of the turbine blade. Furthermore a suction channel and a blow channel extend inside the blade for supplying an underpressure and an overpressure respectively to the pressure chamber, each pressure chamber being connected to at least one of said channels through an air passage in which an actively operable valve is located. The valve is connected to a control unit for selectively bringing the pressure chamber into communication with or close it off from said channel(s) so as to blow air out of the pressure chamber or suck air into the pressure chamber through the corresponding opening(s) in the blade surface.

US2012/0027590 discloses a rotor blade assembly for reducing the noise of a rotor blade for a wind turbine. The rotor blade has surfaces defining a pressure side, a suction side, a leading edge, and a trailing edge extending between a tip and a root. The rotor blade assembly further includes a noise reducer configured on a surface of the rotor blade, the noise reducer including a plurality of noise reduction features. Each of the plurality of noise reduction features includes a first surface and a second surface. The first surface includes a first portion mounted to one of the pressure side or the suction side and a second portion configured to interact with wind flowing past the other of the pressure side or the suction side. The second surface interrupts an aerodynamic contour of the pressure side or the suction side.

WO2014/207015 discloses a wind turbine blade with features according to the preamble of claim 1, to note a wind turbine blade provided with a leading edge and a trailing edge, wherein the trailing edge is sharper than the leading edge and wherein a pressure side surface and a suction side surface of the wind turbine blade meet each other at the trailing edge, wherein the trailing edge is non-truncated, and a flow-permeable add-on is attached to the pressure side surface and to the suction side surface of the trailing edge, which add-on is provided with through-holes that connect opposite sides of the add-on on the pressure side and the suction side, respectively.

It is an object of the invention to improve the anticlogging properties of the wind turbine blade.

It is another object of the invention to improve the noise mitigation properties of the wind turbine blade.

Still another object of the invention is to improve lift generation of the blade at high incidence flow.

Yet still another object of the invention is to promote flow reattachment to the blade.

These and other objects of the invention which will become apparent from the following discussion are provided by a wind turbine blade having the features of one or more of the appended claims.

In a first aspect of the invention wherein the add-on is provided with through-holes that connect opposite sides of the add-on on the pressure side and the suction side, respectively, anticlogging properties of the blade are improved with the feature that when looking from the pressure side towards the suction side, at least one of said through-holes is provided with an increasing dimension of the open area provided by said through-hole such that the open area at the suction side is larger than the open area at the pressure side. By placing the wind turbine blade at incidence to the wind flow, effective purging of the through-holes may be achieved. At the same time the add-on mitigates broadband and tonal noise components generated by the interaction between the wind turbine blade and the airflow.

Best results are achieved when the add-on is flush with the pressure side surface and/or the suction side surface of the trailing edge.

To improve lift it is further desirable that the add-on is provided with an add-on edge such that the add-on extends the wind turbine blade by arranging that said add-on edge generally extends at a predefined distance from the trailing edge, and in parallel with the trailing edge of the wind turbine blade.

Preferably the add-on edge extends uninterruptedly along an entire span of the add-on.

For quite another purpose it may be preferable that when looking from the pressure side towards the suction side, at least one of said through-holes is provided with a decreasing dimension of the open area provided by said through-hole such that the open area at the suction side is smaller than the open area at the pressure side. This facilitates reattachment of the flow to the wind turbine blade, which is particularly desirable when the blade works in an off-design condition (negative lift).

In some embodiments the through-holes are provided with mutually different diameters and/or shapes and/or density in the add-on. Accordingly additional noise mitigation may be achieved in comparison with a fully homogenous series of through-holes.

Suitable embodiments of the shape of the through-holes are selected from the group comprising conical-, pyramidal- and honeycomb shape.

The lift enhancing properties of the wind turbine blade are promoted by arranging that the through-holes have an inner wall that is at an angle with reference to a longitudinal axis of the through-hole, which angle is in the range 22.5 - 45°.

The invention will hereinafter be further elucidated with reference to the drawing of an exemplary embodiment of a wind turbine blade according to the invention that is not limiting as to the appended claims.

In the drawing:
- figure 1 shows a top view at a wind turbine blade of the invention;
- figure 2 shows a cross-sectional view at the wind turbine blade along the line A - B in figure 1; and
- figure 3 shows a detailed view at some of the through-holes of the add-on of the wind turbine blade of the invention.

Whenever in the figures the same reference numerals are applied, these numerals refer to the same parts.

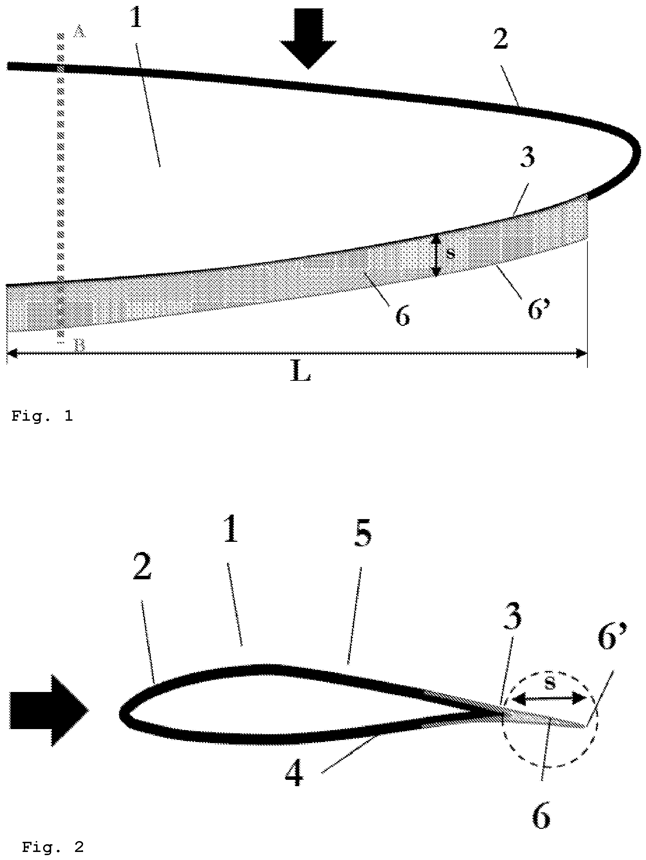

Making first reference to figure 1, this figure provides a top view on a wind turbine blade 1 which has a leading edge 2 and a trailing edge 3. Figure 2 shows that the trailing edge 3 is sharper than the leading edge 2. The wind turbine blade 1 further has a pressure side surface 4 and a suction side surface 5, and figure 2 shows that said pressure side surface 4 and said suction side surface 5 of the wind turbine blade 1 meet each other at the trailing edge 3. The trailing edge 3 is therefore relatively pointy. In particular it can be observed that the trailing edge 3 is non-truncated. Attached to the pressure side surface 4 and to the suction side surface 5 of the trailing edge 3 is an add-on 6, as is shown in both figure 1 and figure 2. The add-on 6 is flow permeable, as will be further explained hereinafter. As is best shown in figure **2****,** the add-on 6 is flush with the pressure side surface 4 and with the suction side surface 5 of the trailing edge 3 of the wind turbine blade 1. A preferable feature is further that the add-on 6 is provided with an add-on edge 6' such that the add-on 6 extends the wind turbine blade 1 by arranging that said add-on edge 6' generally extends at a predefined distance s from the trailing edge 3 of the wind turbine blade 1, and essentially in parallel with said trailing edge 3 of the wind turbine blade 1. It is further shown that the add-on edge 6' extends uninterruptedly along an entire span L of the add-on 6.

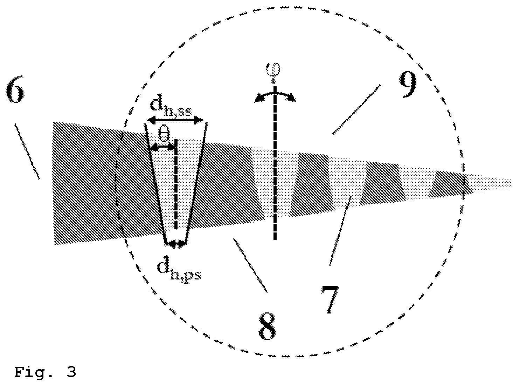

With reference to the flow permeable properties of the add-on 6, reference is made to figure 3 which shows that the add-on 6 is provided with through-holes 7 that connect opposite sides of the add-on 6 on the pressure side 8 and the suction side 9 respectively. Figure 3 shows that looking from the pressure side 8 towards the suction side 9, the through-holes 7 are provided with an increasing dimension of the open area provided by said through-hole 7 such that the open area d_{h,ss} at the suction side 9 is larger than the open area d_{h,ps} at the pressure side 8. In some embodiments it may be preferable that looking from the pressure side 8 towards the suction side 9, at least one of said through-holes is provided with a decreasing dimension of the open area provided by said through-hole such that the open area at the suction side 9 is smaller than the open area at the pressure side 8. The way this can be implemented is self-explanatory and requires no further elucidation with reference to the drawing.

In some embodiments it may be desirable that the through-holes 7 are provided with mutually different diameters and/or shapes and/or density of distribution in the add-on 6. Also this is self-explanatory for the skilled person, obviating the need to provide a further elucidation with reference to the drawing.

Generally speaking the shape of the through-holes 7 is selected from the group comprising conical shape, pyramidal shape, and honeycomb-line shape.

Finally it is remarked that the through-holes 7 have an inner wall that is at an angle with reference to a longitudinal axis of the through-hole, which angle is in the range 22.5 - 45°. This is shown in figure 3.

Although the invention has been discussed in the foregoing with reference to an exemplary embodiment of the wind turbine blade of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. A wind turbine blade (1) provided with a leading edge (2) and a trailing edge (3), wherein the trailing edge (3) is sharper than the leading edge (2) and wherein a pressure side surface (4) and a suction side surface (5) of the wind turbine blade (1) meet each other at the trailing edge (3), wherein the trailing edge (3) is non-truncated, and a flow-permeable add-on (6) is attached to the pressure side surface (4) and/or to the suction side surface (5) of the trailing edge (3), which add-on (6) is provided with through-holes (7) that connect opposite sides of the add-on (6) on the pressure side (8) and the suction side (9) respectively, **characterized in that** looking from the pressure side (8) towards the suction side (9), at least one of said through-holes (7) is provided with an increasing dimension of the open area provided by said through-hole (7) such that the open area at the suction side (9) is larger than the open area at the pressure side (8).

2. The wind turbine blade of claim 1, **characterized in that** the add-on (6) is flush with the pressure side surface (4) and/or with the suction side surface (5) of the trailing edge (3).

3. The wind turbine blade of claim 1 or 2, **characterized in that** the add-on (6) is provided with an add-on edge (6') such that the add-on (6) extends the wind turbine blade (1) by arranging that said add-on edge (6) generally extends at a predefined distance (s) from the trailing edge (3), and in parallel with the trailing edge (3) of the wind turbine blade (1).

4. The wind turbine blade of claim 3, **characterized in that** the add-on edge (6') extends uninterruptedly along an entire span (L) of the add-on (6).

5. The wind turbine blade of any one of claims 1 - 4, **characterized in that** looking from the pressure side (8) towards the suction side (9), at least one of said through-holes (7) is provided with a decreasing dimension of the open area provided by said through-hole (7) such that the open area at the suction side (9) is smaller than the open area at the pressure side (8).

6. The wind turbine blade according to any one of claims 1 - 5, **characterized in that** the through-holes (7) are provided with mutually different diameters and/or shapes and/or density in the add-on (6).

7. The wind turbine blade according to any one of claims 1 - 6, **characterized in that** the shape of the through-holes (7) is selected from the group comprising conical shape, pyramidal shape, and honeycomb shape.

8. The wind turbine blade according to any one of claims 1 - 7, **characterized in that** the through-holes (7) have an inner wall that is at an angle with reference to a longitudinal axis of the through-hole, which angle is in the range 22.5 - 45°.

## Patentansprüche

1. Windturbinenschaufel (1), die mit einer Vorderkante (2) und einer Hinterkante (3) versehen ist, wobei die Hinterkante (3) schärfer als die Vorderkante (2) ist und wobei eine Druckseitenoberfläche (4) und eine Saugseitenoberfläche (5) der Windturbinenschaufel (1) an der Hinterkante (3) aufeinander treffen, wobei die Hinterkante (3) nicht abgeschrägt ist und ein strömungsdurchlässiger Zusatz (6) an der Druckseitenoberfläche (4) und/oder an der Saugseitenoberfläche (5) der Hinterkante (3) angebracht ist, wobei der Zusatz (6) mit Durchgangslöchern (7) versehen ist, die gegenüberliegende Seiten des Zusatzes (6) auf der Druckseite (8) beziehungsweise der Saugseite (9) verbinden, **dadurch gekennzeichnet, dass** von der Druckseite (8) in Richtung der Saugseite (9) gesehen mindestens eines der Durchgangslöcher (7) mit einer zunehmenden Abmessung der durch das Durchgangsloch (7) bereitgestellten offenen Fläche derart versehen ist, dass die offene Fläche an der Saugseite (9) größer als die offene Fläche an der Druckseite (8) ist.

2. Windturbinenschaufel nach Anspruch 1, **dadurch gekennzeichnet, dass** der Zusatz (6) mit der Druckseitenoberfläche (4) und/oder mit der Saugseitenoberfläche (5) der Hinterkante (3) bündig ist.

3. Windturbinenschaufel nach Anspruch 1 oder 2, **dadurch gekennzeichnet, dass** der Zusatz (6) mit einer Zusatzkante (6') derart versehen ist, dass der Zusatz (6) die Windturbinenschaufel (1) durch Anordnen der Zusatzkante (6) im Allgemeinen in einem vordefinierten Abstand (s) von der Hinterkante (3) und parallel zu der Hinterkante (3) der Windturbinenschaufel (1) verlängert.

4. Windturbinenschaufel nach Anspruch 3, **dadurch gekennzeichnet, dass** der Zusatz (6') sich ununterbrochen entlang einer gesamten Spannweite (L) des Zusatzes (6) erstreckt.

5. Windturbinenschaufel nach einem der Ansprüche 1 bis 4,
**dadurch gekennzeichnet, dass** von der Druckseite (8) in Richtung der Saugseite (9) gesehen mindestens eines der Durchgangslöcher (7) mit einer abnehmenden Abmessung der durch das Durchgangsloch (7) bereitgestellten offenen Fläche derart versehen ist, dass die offene Fläche an der Saugseite (9) kleiner als die offene Fläche an der Druckseite (8) ist.

6. Windturbinenschaufel nach einem der Ansprüche 1 bis 5,
**dadurch gekennzeichnet, dass** die Durchgangslöcher (7) mit voneinander verschiedenen Durchmessern und/oder Formen und/oder einer verschiedenen Dichte in dem Zusatz (6) versehen sind.

7. Windturbinenschaufel nach einem der Ansprüche 1 bis 6,
**dadurch gekennzeichnet, dass** die Form der Durchgangslöcher (7) aus der Gruppe ausgewählt ist, die eine konische Form, eine Pyramidenform und eine Wabenform umfasst.

8. Windturbinenschaufel nach einem der Ansprüche 1 bis 7,
**dadurch gekennzeichnet, dass** die Durchgangslöcher (7) eine Innenwand aufweisen, die in Bezug auf eine Längsachse des Durchgangslochs in einem Winkel verläuft, wobei der Winkel in dem Bereich von 22,5 bis 45° liegt.

## Revendications

1. Pale d'éolienne (1) munie d'un bord d'attaque (2) et d'un bord de fuite (3), dans laquelle le bord de fuite (3) est plus aigu que le bord d'attaque (2) et dans laquelle une surface latérale de pression (4) et une surface latérale d'aspiration (5) de la pale d'éolienne (1) se rejoignent au niveau du bord de fuite (3), dans lequel le bord de fuite (3) n'est pas tronqué et un élément complémentaire perméable à l'écoulement (6) est fixé à la surface latérale de pression (4) et/ou à la surface latérale d'aspiration (5) du bord de fuite (3), cet accessoire (6) est pourvu de trous de passage (7) qui relient les côtés opposés de l'accessoire (6) du côté de la pression (8) et du côté de l'aspiration (9) respectivement, **caractérisée en ce que,** en regardant du côté de la pression (8) vers le côté de l'aspiration (9), au moins un desdits trous de passage (7) est pourvu d'une dimension croissante de la zone ouverte fournie par ledit trou de passage (7) de telle sorte que la zone ouverte du côté de l'aspiration (9) est plus grande que la zone ouverte du côté de la pression (8).

2. Pale d'éolienne selon la revendication 1, **caractérisée en ce que** l'accessoire (6) affleure la surface latérale de pression (4) et/ou la surface latérale d'aspiration (5) du bord de fuite (3).

3. Pale d'éolienne selon la revendication 1 ou 2, **caractérisée en ce que** l'accessoire (6) est pourvu d'un bord accessoire (6') tel que l'accessoire (6) prolonge la pale d'éolienne (1) en faisant en sorte que ledit bord accessoire (6) s'étende généralement à une distance prédéfinie (s) du bord de fuite (3), et parallèlement au bord de fuite (3) de la pale d'éolienne (1).

4. Pale d'éolienne selon la revendication 3, **caractérisée en ce que** le bord de l'élément accessoire (6') s'étend de manière ininterrompue sur toute la longueur (L) de l'élément accessoire (6).

5. Pale d'éolienne selon l'une des revendications 1 à 4, **caractérisée en ce que** en regardant du côté pression (8) vers le côté aspiration (9), au moins l'un desdits trous traversants (7) est pourvu d'une dimension décroissante de la zone ouverte fournie par ledit trou traversant (7) de telle sorte que la zone ouverte du côté aspiration (9) est plus petite que la zone ouverte du côté pression (8).

6. Pale d'éolienne selon l'une des revendications 1 à 5, **caractérisée en ce que** les trous de passage (7) ont des diamètres et/ou des formes et/ou une densité mutuellement différents dans l'élément accessoire (6).

7. Pale d'éolienne selon l'une des revendications 1 à 6, **caractérisée en ce que** la forme des trous de passage (7) est choisie dans le groupe comprenant la forme conique, la forme pyramidale et la forme en nid d'abeille.

8. Pale d'éolienne selon l'une des revendications 1 à 7, **caractérisée en ce que** les trous de passage (7) ont une paroi intérieure qui forme un angle par rapport à l'axe longitudinal du trou de passage, cet angle étant compris entre 22,5 et 45°.
